# EUROPEAN PATENT SPECIFICATION

(11) **EP 4 253 318 B1**
(45) Date of publication and mention of the grant of the patent: **11.12.2024**
(21) Application number: 22398007.9
(22) Date of filing: 30.03.2022
(51) Int. Cl.: C01B 32/39, C10B 53/00, C10B 49/10, C01B 32/336, C01B 32/318

(54) **EQUIPMENT TO PRODUCE ACTIVATED CARBON BY PHYSICAL ACTIVATION**
ANLAGE ZUR HERSTELLUNG VON AKTIVKOHLE DURCH PHYSIKALISCHE AKTIVIERUNG
EQUIPEMENT PRODUIRE DU CHARBON ACTIF PAR ACTIVATION PHYSIQUE

(43) Date of publication of application: 04.10.2023
(73) Proprietor: BGW, S.A., 3250-421 Rego da Murta (PT)
(72) Inventor: Gulyurtlu, Ibrahim Kadri, 2750-228 CASCAIS (PT); De Almeida Ferreirinha, Pedro Luis, 3660-694 Várzea SPS São Pedro do Sul (PT)
(74) Representative: Ferreira Magno, Fernando Antonio

(56) References cited:
- EP-A1- 1 897 852
- CN-A- 112 662 434
- US-A- 3 700 563
- US-A- 4 010 002
- US-A- 4 039 290

## Description

### Field of the Invention

The present invention relates in general to the equipment to produce activated carbon from carbon bio-precursors by physical activation. Also relates to an innovative arrangement where two fluidized bed reactors are concentrically arranged.

### Prior art

Activated carbons (AC) are porous materials, with a high surface area, high carbon yield, and low ash content. Usually, AC can be obtained from non-renewable sources like mineral charcoal or from biomass if it has high carbon yield. Due to environmental problems, the use of non-renewable sources poses a major problem to the development of the society and large amount of effort has been made to find alternatives

The basic of turning a carbonaceous material into an activated carbon can be described as the generation of pores with appropriate internal diameter and adsorption-effective chemical groups. The carbonization step to obtain the bio-charcoal is described in the document WO2021066664A1. In physical activation method, basically the carbon precursor is heat treated at temperatures up to 1100 °C in the presence of gaseous agents such as CO₂, steam, and air to generate pores. The porous structure depends on the activation method but strongly on the nature of the carbon precursor.

The prior art US 4224286 discloses an AC regenerator equipment where they recognized the inefficiency of using a vertical heating furnace where the carbon material falls gravitationally through the eating chamber. To overcome the inefficiency of the process, to control the movement of the carbon particles they design a complex reactor where the carbon materials fall through multiple spiral elements. This poses huge difficulties to control the process, the exhaust of the spent gases is complicated and the contact of the carbon precursor with the activation gas critical for the activation process is not ideal.

The efficiency of solid/gas contact is higher in fluidized beds than in rotary kiln. The regeneration process described by US 4391586 uses two independent fluidized bed reactors arranged vertically. Fluidized beds despite being a more efficient technology the arrangement proposed is quite complex and envisioned only for the regeneration of spent AC, mainly for spent AC from water purification systems as advised by the

US3700563 A discloses a fludized bed reactor which is divided in an inner space and an outer space concentrically arranged for the production of activated carbon.

### Object of the invention

The object of this invention is the concentrically arrangement of two fluidized bed reactors resulting in higher temperature stability and higher energetic efficiency. In addition to the innovative concentric arrangement of two independent fluidized bed reactors, this equipment to produce activated carbon works at the same time as a circulating fluidized bed reactor when activating the smaller size carbon particles. This unique feature allows the simultaneous activation of carbon particles with a wide range of size and shape. Another object of this invention is the versatility of this equipment that allows the use of any type of carbon bio-precursors, and it can be used either for activation or regeneration of spent AC.

### Summary of the Invention

The above-stated objects are accomplished, and a more efficient and versatile equipment is proposed, allowing the use of bio-charcoal with a wide range of particle size, humidity, and shape. During the entire process of activation, the temperature is kept much more stable, even when bio-charcoal is fed into the reactor, thus providing to the user a higher control of the process, which could only be obtained by the concentrically arrangement of the two fluidized bed reactors.

Grinding vegetable carbon produces a wide particle size distribution. Therefore, the water steam required to fluidize the bed and activate the bigger vegetable carbon particles will transport the smaller one's prior being fully activated. This equipment has the capability to recirculate these particles similarly to a circulating fluidized bed reactor. At the same time, the particles with higher diameter will stay inside the fluidized bed until the activation cycle finishes. This characteristic allows the simultaneous activation of particles with wider size distribution.

This equipment allows to fine tune the operating conditions which allows the production of AC with tailor made properties. It could be obtained AC with a wide range of surface area, higher than 1500 m²/g, wide range of iodine number, wide range of methylene blue number. All of this makes the AC produce by this equipment a high-quality adsorbent with excellent contaminants adsorption capabilities.

The process for producing activated carbon using the equipment according to de invention comprises the following steps:
a) Place the vegetable carbon into the silo.
b) Ensure the existence of an inert atmosphere in the feeding line by using a nitrogen flow.
c) Fed the vegetable carbon. Ideally, the diameter of the vegetable carbon particles should be between 1-3 mm, nevertheless it could be used particles with diameter up to 6 mm.
d) Heat the outer fluidized bed reactor using the auxiliary fuel and at the same time uses the same produce water steam at a pressure up to 8 bar and at a temperature up to 180 °C which is subsequently overheated to the desired temperature.
e) Supply the equipment with superheated water steam. Ideally, the ratio water steam/vegetable carbon should be between 0.24-0.48 and the temperature of activation should be between 850-950 °C. Nevertheless, it can operate with higher activation temperatures, up to 1050 °C and pressure up to 5 bar.
f) Record the temperature during the activation process.
g) The activation process originates gases that are fed into the burners, thus replacing the auxiliary gas used to start the process. In this way, the high calorific power of the synthesis gas is re-used, making this process energetically more efficient without liberating harmful gases into the atmosphere.
h) The combustion gases that leaves the outer fluidized bed are sent to the heat exchanger to take advantage of this hot stream to overheat the steam.
i) As soon as the activation cycle is completed, the AC is discharged and stored.

The novelty features of this invention are detailed in the claims and form part of this disclosure. For better understanding of the equipment and parts specifications the invention will be further described with reference to the accompanying drawings which illustrates a non-limiting example of the preferred embodiment.

### Brief Description of the Drawings

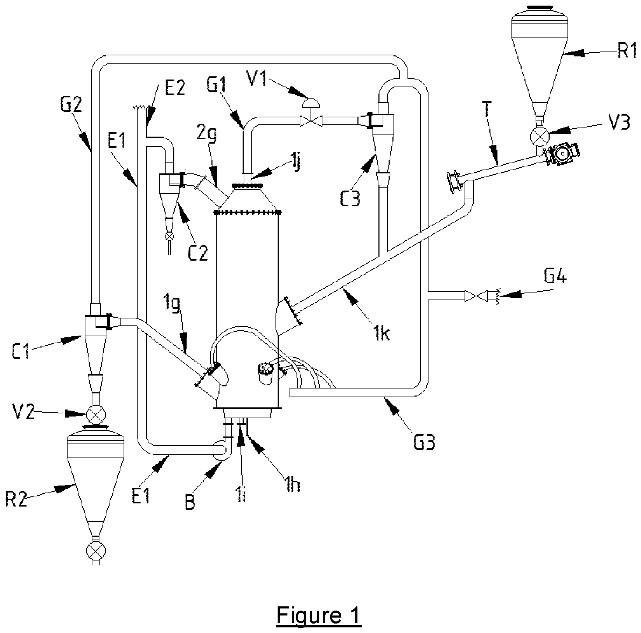

Figure 1 illustrates the schematic diagram of the overall equipment.

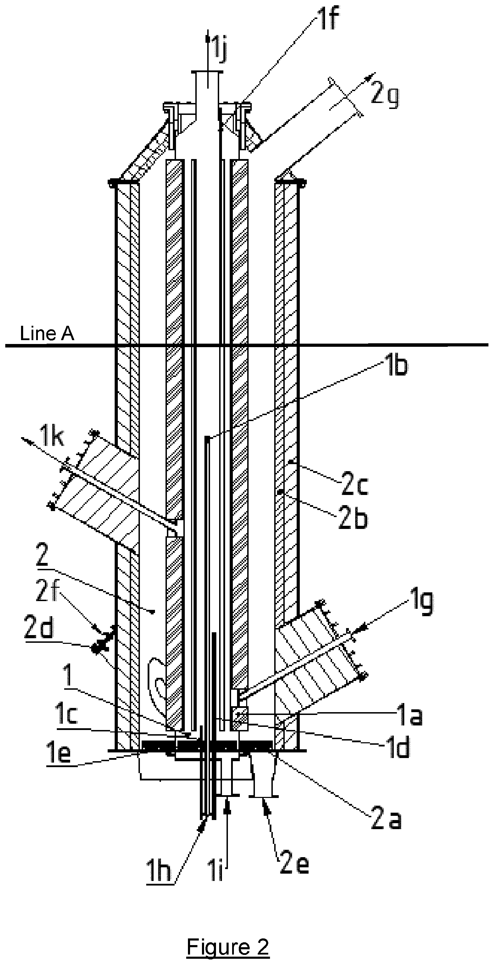

Figure 2 illustrates a longitudinal sectional view of the two fluidized bed reactors concentrically arranged.
Figure 3 illustrates a sectional top view taken along line A.

### Detailed Description of the Invention

According to the present invention, this equipment is mainly composed by an activation unit, a vegetable carbon feeding unit, an AC discharge unit, a unit to collect and re-use the synthesis gas, a unit to collect and re-use the combustion hot gas.

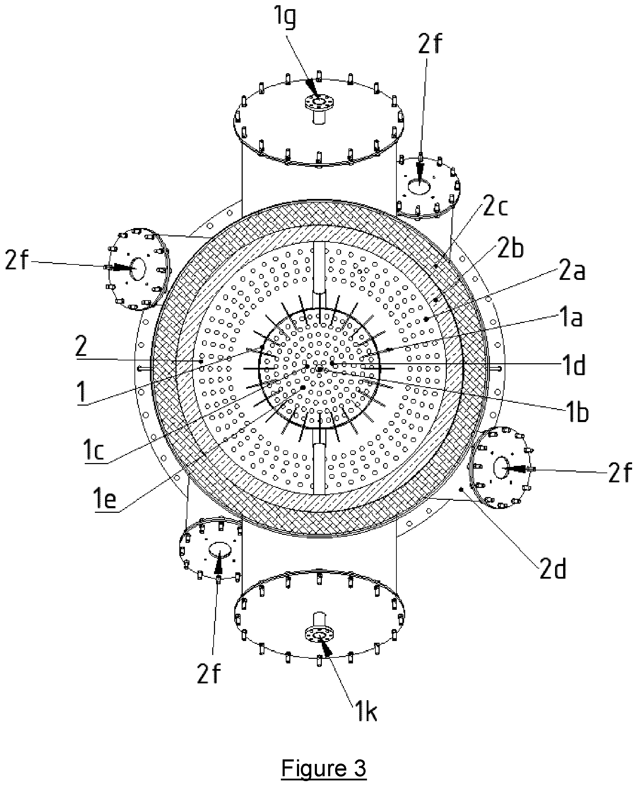

The activation unit is composed by an internal fluidized bed reactor **1** concentrically arranged inside the external fluidized bed reactor **2.** Inside the internal fluidized bed reactor **1** there are two temperature sensors **1c** and **1d,** one pressure sensor **1f** which is used to monitor the bed height and pressure inside the reactor. The activation reactor further comprises a distributor plate as depicted in Figure 3. The internal fluidized bed reactor **1** and the external fluidized bed reactor **2** are separated by thin walls which were enhanced with heat transfer fins **1a,** to maximize the heat transfer, and refractory layers **2b** and **2c.**

The vegetable carbon feeding unit is composed by vegetable carbon silo **R1** accoupled to a rotary valve V3 connected to a screw feeder **T.** The vegetable carbon enters the activation reactor through the feeding pipe **1k.**

The AC discharge unit is composed by an AC silo, **R2,** coupled to a rotary valve **V2** which is connected to the cyclone **C1,** that separates the AC from the gas. The AC exits the activation reactor trough pipe **1g.**

The combustion hot gas from the external fluidized bed reactor **2** goes through the cyclone **C2** and after removing the particles in suspension, the hot gas is directed through the **E1** pipe and enter the external fluidized bed reactor **2** as the fluidizing agent using the blower **B.**

The synthesis gas from the internal fluidized bed reactor **1** is re-used as combustible to the burners. To do so, this gas exits the reactor trough **1j** and is forward to the cyclone **C3** trough line **G1** which equipped with a pressure regulation valve. This stream drags the smaller carbon particles out from the internal fluidized bed reactor **1** prior being completely transformed into AC. Taking this into account, these particles after being collected in the cyclone **C3** are forward again to the activation of the internal fluidized bed reactor **1,** using the feeding line **1k** to complete the activation cycle. To control the ratio water steam/vegetable carbon of the particles being recirculated, the internal fluidized bed reactor **1** is equipped with a steam feeding tube **1h,** that feeds, trough the nozzle **1b,** water steam to the central part of the internal fluidized bed reactor **1.** The synthesis gas, after being separated from the smaller carbon particles in cyclone **C3,** is mixed with the gas coming from the AC discharge using the pipe **G2** and forward to the burners through pipe **G3** to be used as combustible. The excess, if necessary, can be forward though pipe **G4** to be stored or used by other equipment.

The process for producing activated carbon using this equipment comprises the following steps:
a) Place the vegetable carbon into the silo **R1.**
b) Ensure the existence of an inert atmosphere in the feeding line by using a nitrogen flow.
c) Fed the AC precursor into the internal fluidized bed reactor **1** through the feed line **1k** using the screw feeder **T.** Ideally, the diameter of the vegetable carbon particles should be between 1-3 mm, nevertheless it could be used particles with diameter up to 6 mm.
d) Heat the external fluidized bed reactor **2** using the auxiliary fuel fed through line **G3.** At the same time uses the same auxiliary fuel to produce water steam at a pressure up to 8 bar and at a temperature up to 180 °C which is subsequently overheated to the desired temperature.
e) Supply the superheated steam to the internal fluidized bed reactor **1** through the steam duct **1i.** Ideally, the ratio water steam/vegetable carbon should be between 0.24-0.48 and the temperature of activation should be between 850-950 °C. Nevertheless, it can operate with higher activation temperatures, up to 1050 °C and pressure up to 5 bar.
f) The temperature inside internal fluidized bed reactor **1** is continuously monitored by sensors **1c** and **1d.**
g) The activation process originates gases that leaves the internal fluidized bed reactor **1** through the line **G1** and pass through the cyclone **C3** to remove the carbon particles that can be dragged out from the internal fluidized bed reactor **1.** The hot gas is fed into the burners trough duct **G3,** thus replacing the auxiliary gas used to start the process. In this way, the high calorific power of the synthesis gas is re-used, making this process energetically more efficient without releasing harmful gases to the atmosphere.
h) The combustion gases that leaves the external fluidized bed reactor **2** through the line **2g,** pass through the cyclone **C2** and then sent to the heat exchanger to take advantage of this hot stream to overheat the steam.
i) As soon as the activation cycle is completed, the AC is discharged from the internal fluidized bed reactor **1** through duct **1g,** equipped with a double valve arrangement, pass through the cyclone **C1** and it is stored in the **R2** silo. The hot gas from the discharge goes through the duct **G2** and it is fed into the burners through duct **G3.**

### Alphanumeric Reference List

1 -Internal fluidized bed reactor
1a - Heat transfer fins
1b -Steam distribution nozzle for the middle section of the internal fluidized bed reactor
1c - Temperature sensor
1d - Temperature sensor
1e - Steam distribution plate
1f - Pressure sensor
1g - Activated carbon discharge pipe
1h - Feeding pipe for the steam to the middle section of the internal fluidized bed reactor
1i -Steam duct for the feeding steam to the bottom section of the internal fluidized bed reactor
1j - Exhaust of synthesis gas
1k - Feeding line of the vegetable carbon
2 - External fluidized bed reactor
2a - Distribution pipes for the fluidization gas
2b - Refractory material
2c - Thermal isolation material
2d - Gas burner
2e - Feeding line for the fluidization gas of the external fluidized bed reactor
2f - Feeding line for the burner gas
2g - Exhaust gas line
B - Ventilator
C1 - Cyclone for the activated carbon discharge
C2 - Cyclone for the combustion gases
C3 - Cyclone for the synthesis gas
E1 - Feeding line to re-use the exhaustion gas of the external fluidized bed reactor
E2 - Hot exhaustion gas line for heat recovery
G1 - Synthesis gas exhaust line from the internal fluidized bed reactor
G2 - Synthesis gas exhaust line from the activated carbon discharge
G3 - Gas distribution line for the burners
G4 - Synthesis gas exhaust line to re-use the gas as combustible
R1 - Vegetable carbon silo
R2 - Activated carbon silo
V1 - Pressure regulation valve for the internal fluidized bed reactor
V2 - Rotary valve for the activated carbon discharge
V3 - Rotary valve for feeding the vegetable carbon
T - Screw feeder

## Claims

1. An equipment to produce activated carbon from carbon bio-precursors by physical activation composed by:
an external fluidized bed reactor (2);
an internal fluidized bed reactor (1);
a silo for the vegetable carbon (R1);
a silo for the activated carbon (R2);
at least 3 cyclones (C1, C2 and C3);
at least one pressure valve (V1);
at least one rotary valve for the activated carbon discharge (V2) ;
at least one rotary valve for feeding the vegetable carbon (V3) ;
at least one screw feeder (T);
at least one blower (B);
**characterized in that**:
the internal fluidized bed reactor (1) it is inserted in the external fluidized bed reactor (2) in a concentric arrangement, the concentric arrangement allowing a higher temperature stability and higher energetic efficiency;
the clean gas outlet of the activated carbon discharge cyclone (C1) is connected to the line (G2) for collecting the discharge gas;
the internal fluidized bed reactor (1) is equipped with a steam feeding tube (1h), that feeds, trough the nozzle (1b), water steam to the central part of the internal fluidized bed reactor (1);
the internal fluidized bed reactor (1) is equipped with a water steam feeding tube (1h);
the internal fluidized bed reactor (1) is supplied with superheated water steam through the steam duct (1i);
the internal fluidized bed reactor (1) and the cyclone (C3) are connected through line (G1) which is equipped with the pressure valve (V1), that controls the pressure inside the internal fluidized bed reactor (1), the line (G1) serving as exhaust line for synthesis gas from the internal fluidized bed reactor (1);
the external fluidized bed reactor (2) and the internal fluidized bed reactor (1) are in heat transfer communication through thin walls and fins (1a);
the external fluidized bed reactor (2) and the cyclone (C2) are connected through the line (2g), the line (2g) serving as exhaust line for combustion gases from the external fluidized bed reactor (2);
the vegetable carbon silo (R1) and the screw feeder (T) are connected through the valve (V3) that feeds the reactor (1) with vegetable carbon using the line (1k).

2. The equipment to produce activated carbon according to claim 1, wherein the synthesis gas and the gas from the discharge of activated carbon are combined and fed to the burners (2d) using the line (G3) or fed to other equipment using the line (G4).

## Patentansprüche

1. Eine Anlage zur Herstellung von Aktivkohle aus Kohlenstoff-Biovorläufern durch physikalische Aktivierung, bestehend aus:
einem externen Wirbelschichtreaktor (2);
einem internen Wirbelschichtreaktor (1);
einem Silo für die Pflanzenkohle (R1);
einem Silo für die Aktivkohle (R2);
mindestens 3 Zyklone (C1, C2 und C3);
mindestens ein Druckventil (V1);
mindestens ein Drehventil für den Aktivkohleaustrag (V2);
mindestens ein Drehventil für die Zufuhr der Pflanzenkohle (V3);
mindestens einen Schneckenaufgeber (T);
mindestens ein Gebläse (B);
**dadurch gekennzeichnet dass**:
der interne Wirbelschichtreaktor (1) in konzentrischer Anordnung in den externen Wirbelschichtreaktor (2) eingesetzt ist, wobei die konzentrische Anordnung eine höhere Temperaturstabilität und höhere Energieeffizienz ermöglicht;
der Reingasauslass des Aktivkohleaustragszyklons (C1) mit der Leitung (G2) zum Sammeln des Austragsgases verbunden ist;
der internen Wirbelschichtreaktor (1) ist mit einem Dampfzufuhrrohr (1h) ausgestattet, das durch die Düse (1b) Wasserdampf in den zentralen Teil des internen Wirbelschichtreaktors (1) einspeist;
der internen Wirbelschichtreaktor (1) ist mit einem Wasserdampfzufuhrrohr (1h) ausgestattet;
der internen Wirbelschichtreaktor (1) wird durch den Dampfkanal (1i) mit überhitztem Wasserdampf versorgt;
der internen Wirbelschichtreaktor (1) und der Zyklon (C3) sind durch eine Leitung (G1) verbunden, die mit dem Druckventil (V1) ausgestattet ist, das den Druck im inneren Wirbelschichtreaktor (1) regelt, wobei die Leitung (G1) als Abgasleitung für Synthesegas aus dem internen Wirbelschichtreaktor (1) dient;
der externen Wirbelschichtreaktor (2) und der internen Wirbelschichtreaktor (1) stehen durch dünne Wände und Rippen (1a) in Wärmeübertragungsverbindung;
der externen Wirbelschichtreaktor (2) und der Zyklon (C2) sind durch die Leitung (2g) verbunden, wobei die Leitung (2g) als Abgasleitung für Verbrennungsgase aus dem externen Wirbelschichtreaktor (2) dient;
der Pflanzenkohlesilo (R1) und der Schneckenaufgeber (T) sind durch das Ventil (V3) verbunden das den Reaktor (1) über die Leitung (1k) mit Pflanzenkohle versorgt.

2. Die Anlage zur Herstellung von Aktivkohle nach Anspruch 1, wobei das Synthesegas und das Gas aus der Entladung der Aktivkohle kombiniert und über die Leitung (G3) den Brennern (2d) zugeführt oder über die Leitung (G4) anderen Anlagen zugeführt werden.

## Revendications

1. Un équipement pour produire du charbon actif à partir de bio-précurseurs de carbone par activation physique composé de:
un réacteur à lit fluidisé externe (2);
un réacteur à lit fluidisé interne (1);
un silo pour le charbon végétal (R1);
un silo pour le charbon actif (R2);
au moins 3 cyclones (C1, C2 et C3);
au moins une vanne de pression (V1);
au moins une vanne rotative pour la décharge de charbon actif (V2);
au moins une vanne rotative pour l'alimentation du charbon végétal (V3);
au moins un l'alimentateur à vis (T);
au moins un ventilateur (B);
**caractérisé en ce que**:
le réacteur à lit fluidisé interne (1) est inséré dans le réacteur à lit fluidisé externe (2) dans un agencement concentrique, l'agencement concentrique permettant une stabilité de température plus élevée et une efficacité énergétique plus élevée;
la sortie de gaz propre du cyclone de décharge de charbon actif (C1) est reliée à la tuyauterie (G2) de collecte du gaz de décharge;
le réacteur à lit fluidisé interne (1) est équipé d'un tube d'alimentation en vapeur (1h), qui alimente, par l'intermédiaire de la buse (1b), vapeur d'eau pour la partie centrale du réacteur à lit fluidisé interne (1);
le réacteur à lit fluidisé interne (1) est équipé d'un tube d'alimentation en vapeur d'eau (1h);
le réacteur à lit fluidisé interne (1) est alimenté en vapeur d'eau surchauffée par le conduit de vapeur (1i);
le réacteur à lit fluidisé interne (1) et le cyclone (C3) sont reliés par la tuyauterie (G1) qui est équipée de la vanne de pression (V1), qui contrôle la pression à l'intérieur du réacteur à lit fluidisé interne (1), la tuyauterie (G1) servant de tuyauterie d'évacuation pour le gaz de synthèse du réacteur à lit fluidisé interne (1);
le réacteur à lit fluidisé externe (2) et le réacteur à lit fluidisé interne (1) sont en communication de transfert de chaleur par des parois minces et des ailettes (1a);
le réacteur à lit fluidisé externe (2) et le cyclone (C2) sont reliés par la tuyauterie (2g), la tuyauterie (2g) servant de tuyauterie d'évacuation des gaz de combustion du réacteur à lit fluidisé externe (2);
le silo de charbon végétal (R1) et l'alimentateur à vis (T) sont reliés par la vanne (V3) qui alimente le réacteur (1) en charbon végétal utilisant la tuyauterie (1k).

2. Equipement de production de charbon actif selon la revendication 1, dans lequel le gaz de synthèse et le gaz provenant de la décharge de charbon actif sont combinés et alimentés vers les brûleurs (2d) utilisant la tuyauterie (G3) ou alimentés vers d'autres équipements utilisant la tuyauterie (G4).
